# EUROPEAN PATENT APPLICATION

(11) **EP 2 754 702 A1**
(43) Date of publication of application: **16.07.2014**
(21) Application number: 12830072.0
(22) Date of filing: 24.08.2012
(51) Int. Cl.: C09D 11/00, B41J 2/01, B41M 5/00, C09B 67/20, C09B 67/22, C09B 67/44, C09B 17/00, C09B 33/18

(54) **WATER-BASED BLACK INK COMPOSITION, INKJET RECORDING METHOD USING SAME, AND COLORED BODY**

(30) Priority: 05.09.2011 JP 2011193218
(71) Applicant: Nippon Kayaku Kabushiki Kaisha, Tokyo 102-8172 (JP)
(72) Inventor: SHIMIZU, Shinsuke, Tokyo 115-8588 (JP); MATSUI, Takahiko, Tokyo 115-8588 (JP); NAGATSUKA, Shinya, Tokyo 115-8588 (JP)
(74) Representative: Maiwald Patentanwalts GmbH
(86) International application number: PCT/JP2012/071508
(87) International publication number: WO 2013/035560

(57) **Abstract**

Provided are: a water-based black ink composition which, when used in inkjet recording and writing tools, can provide recorded matter that exhibits excellent color development, excellent light fastness, excellent resistances to ozone gas, moisture and water, and excellent accommodation characteristics to a sensor, and which has excellent solubility and therefore can be stably stored in the form of a recording fluid; and an inkjet recording method and a colored body, using the same. The water-based black ink composition contains C.I. Acid Black 2 as a colorant component. The inkjet recording method uses the water-based black ink composition, while the colored body is a body colored with the water-based black ink composition.

## Description

### TECHNICAL FIELD

The present invention relates to a water-based black ink composition, an ink jet recording method using the same, and a colored body.

### BACKGROUND ART

One of the representative methods for various color recording methods is a recording method using an ink jet printer, that is, an ink jet recording method. This recording method involves producing small droplets of ink and attaching these small droplets to various record-receiving materials (paper, film, clothes and the like) to carry out recording. In this method, the method is characterized in that since the recording head and the record-receiving material are not brought into direct contact, the process is quiet with less noise generation, and size reduction or an increased speed can easily be achieved. Therefore, the method has rapidly become popular in recent years, and an extensive growth in the use of the method is expected.

Conventionally, aqueous inks prepared by dissolving a water-soluble coloring matter in an aqueous medium have been used as the inks for fountain pens, felt pens and the like and as the inks for ink jet printing. In these aqueous inks, water-soluble organic solvents are generally added so as to prevent clogging of the inks at the pen tips or ink discharge nozzles. Furthermore, these inks are required to have advantages such as the production of recorded images of sufficient densities, no occurrence of clogging at the pen tips or nozzles, satisfactory drying properties on record-receiving materials, less bleeding, and excellent storage stability. Also, the water-soluble coloring matters used therein are required to have high solubility, particularly in water, and high solubility in the water-soluble organic solvents that are added to the ink. In addition, the images thus formed are required to have image fastness properties, such as water resistance and light fastness, and color reproducibility, and furthermore, importantly not to simply have only high image fastness properties, but also a balance of the respective colors.

The printing speed in ink jet printing notably improved in recent years along with the development of ink jet technology. For this reason, there is a tendency for using ink jet printers in the printing of documents on plain paper, which is a major use in commercial printing or an office environment, similarly to laser printers using electronic toners. An ink jet printer has advantages in that it is independent of the kind of recording paper and the cost of the machine is relatively inexpensive, and particularly becomes popular in small to medium scale office environments such as SOHO. When an ink jet printer is used for the use on plain paper as described above, color development properties and water resistance tend to become more important among the other qualities required for a printing object. In order to satisfy these property requirements, a method of using a pigment ink has been proposed. However, pigment ink is not a solution, but a dispersion in which solid pigments are dispersed. Thus, if pigment ink is used, problems easily occur with the pigment ink, such as the storage stability of the ink is poor, and the nozzles of the printer head become clogged, and the like in comparison to a dye ink. Furthermore, when pigment ink is used, the pigment ink often has a problem in that the abrasion resistance of the printed images is low. When a dye ink is used, the coloring matter component, that is, the dye dissolves in the ink, and thus such problems occur relatively less often than in the case of a pigment ink. However, dye ink is generally significantly inferior particularly in respect of color development properties, light fastness and water resistance in comparison to pigment ink, and demands much improvement.

In addition, examples of performances required in the commercial printing field include light absorption property, particularly in the near-infrared light region beyond the visible region (reflection property). This is because it is necessary to respond to reading by various sensors, such as a near-infrared light sensor.

Furthermore, examples of performances required for an ink composition for the purpose of printing on plain paper include color reproducibility (color development properties, specifically chroma and brightness), storage stability, ozone gas resistance (oxidative gas resistance), moisture resistance and the like in addition to those described above. However, an ink composition that can meet all the properties sufficiently has not been proposed as yet.

Accordingly, an ink composition used for ink jet recording and a colored body colored by the ink composition are strongly required in the future for further improvement in light fastness, ozone gas resistance, water resistance, moisture resistance and sensor reading response so as to expand the use field of the printing method using the ink.

Inks of various colors have been prepared from various dyes; however, among them, a black ink is an important ink that is used in both monocolor and full-color images. However, there are many difficult technical aspects in developing a coloring matter having a neutral hue between the dark color gamut and the light color gamut, having high print density, and also having excellent fastness properties. Thus, although much research and development has been carried out, those with suitable performance are still few. For this reason, the preparation of a black ink is generally carried out by mixing multiple, versatile coloring matters. However, the preparation of an ink by mixing multiple coloring matters easily has problems, such as variation of the hues depending on the medium (record-receiving materials), and particularly, the increase of discoloration due to decomposition of the coloring matters by light or ozone gas, or bleeding by water, in comparison to the preparation of an ink with a single coloring matter.

Many coloring matters proposed as a dye for black ink are azo coloring matters, and among them, azo coloring matters such as C.I. Direct Black 19 have problems such as low optical density of images, and insufficient water resistance, light fastness, and ozone gas resistance. Furthermore, many azo metal coloring matters proposed in the same manner are good in light fastness, but have problems such as the undesirable property with respect to safety to organisms or the environment due to the metal ion contained in it, and very weak ozone gas resistance. Although many such things have been proposed, they do not provide products sufficiently meeting the demands on the market.

For example, those disclosed in Patent Documents 1 to 3 or the like have been proposed as a black ink in which dyes for color adjustment are further blended with a black dye, but they do not provide products that sufficiently meet the demands on the market.

Furthermore, the dyes used in the present invention are described in Patent Documents 4 and 5. However, these dyes are assumed to be applied to special paper or electrophotographic paper provided with a specific receiving layer, and thus the effects when printed on plain paper cannot be said to be sufficient. Accordingly, the problem to be solved by the present invention is to realize a water-based black ink composition having sufficient properties (for example, moisture resistance and the like) not only on special paper or electrophotographic paper provided with a specific receiving layer, but also on plain paper.

As a black colorant suitable for a dye ink for ink jet recording, for example, C.I. Direct Black 19 described above and the compound of the formula (1) of the present application, which is described in Patent Document 6, and the like are known.
Patent Document 1: Japanese Examined Patent Application Publication No. H07-122044
Patent Document 2: Japanese Patent No. 3178200
Patent Document 3: Japanese Unexamined Patent Application, Publication No. H9-255906
Patent Document 4: Japanese Unexamined Patent Application, Publication No. H10-60336
Patent Document 5: Japanese Unexamined Patent Application, Publication No. H11-5932
Patent Document 6: PCT International Application, Publication No. 2006/051850

### DISCLOSURE OF THE INVENTION

### Problems to be Solved by the Invention

The object of the present invention is to provide a water-based black ink composition that has high print density, has low reflectance in the near-infrared light region, and is excellent in the absorption property of near infrared light.

### Means for Solving the Problems

The inventors of the present invention repeatedly conducted thorough investigations so as to solve the problems described above, and as a result, the inventors found that a water-based black ink composition is obtained by using C.I. Acid Black 2, which is a specific dye as a coloring matter component of a black ink, has enhanced hues, and furthermore has good various other properties, and particularly has enhanced sensor response in the near-infrared light region, thus completing the present invention.

Accordingly, the first aspect of the present invention provides a water-based black ink composition containing (i) C.I. Acid Black 2 as a coloring matter component.

The second aspect of the invention provides the water-based black ink composition according to the first aspect, in which the water-based black ink composition further contains (ii) a dye having three or more azo bonds (-N=N-) in a molecule as a coloring matter component.

The third aspect of the invention provides the water-based black ink composition according to the second aspect, in which the dye having three or more azo bonds (-N=N-) in the molecule is a black dye represented by the following formula (1) or a salt thereof: 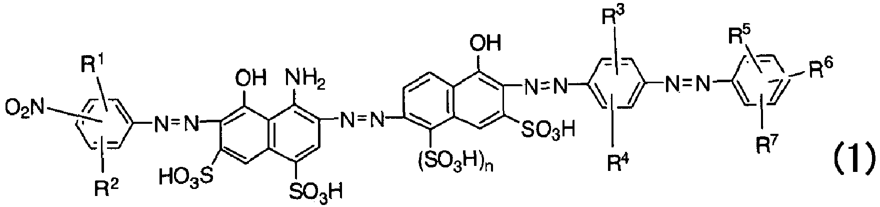
in the formula (1), R¹, R², R⁵, R⁶, and R⁷ each independently represent a hydrogen atom; a halogen atom; a cyano group; a hydroxy group; a carboxy group; a sulfo group; a sulfamoyl group; an N-alkylaminosulfonyl group; an N-phenylaminosulfonyl group; a (C1-C4) alkylsulfonyl group optionally substituted with a hydroxy group; a phospho group; a nitro group; an acyl group; an ureido group; a (C1-C4) alkyl group optionally substituted with at least one group selected from the groups consisting of a hydroxy group and a (C1-C4) alkoxy group; a (C1-C4) alkoxy group optionally substituted with at least one group selected from the groups consisting of a hydroxy group, a (C1-C4) alkoxy group, a sulfo group, and a carboxy group; an acylamino group, an alkylsulfonylamino group; or a phenylsulfonylamino group optionally substituted with at least one group selected from the groups consisting of a halogen atom, an alkyl group, and a nitro group;
R³ and R⁴ each independently represent a hydrogen atom; a halogen atom; a cyano group; a carboxy group; a sulfo group; a nitro group; a (C1-C4) alkyl group optionally substituted with at least one group selected from the groups consisting of a hydroxy group and a (C1-C4) alkoxy group; a (C1-C4) alkoxy group optionally substituted with at least one group selected from the groups consisting of a hydroxy group, a (C1-C4) alkoxy group, a sulfo group, and a carboxy group; an acylamino group; an alkylsulfonylamino group; or a phenylsulfonylamino group optionally substituted with at least one group selected from the groups consisting of a halogen atom, an alkyl group, and a nitro group; and
n represents 0 or 1.

The fourth aspect of the invention provides the water-based black ink composition according to the third aspect, in which in the formula (1), R¹ is a carboxy group or a sulfo group, R² is a hydrogen atom, R⁶ is a nitro group, a carboxy group, or a sulfo group, and n is 1.

The fifth aspect of the invention provides the ink composition according to the third or fourth aspect, in which when R¹ is a sulfo group, and when the substitution position of R¹ is the ortho position with respect to the azo group, the substitution position of the nitro group is the para position with respect to the azo group, and when the substitution position of R¹ is the para position with respect to the azo group, the substitution position of the nitro group is the ortho position with respect to the azo group.

The sixth aspect of the invention provides the water-based black ink composition according to any one of the third to fifth aspects, in which R³ is a sulfo group, R⁴ is a hydrogen atom, R⁵ is a hydrogen atom, a carboxy group, or a sulfo group, and R⁷ is a hydrogen atom.

The seventh aspect of the invention provides the water-based black ink composition according to the third aspect, in which the black dye represented by the formula (1) is a black dye represented by the following formula (2): 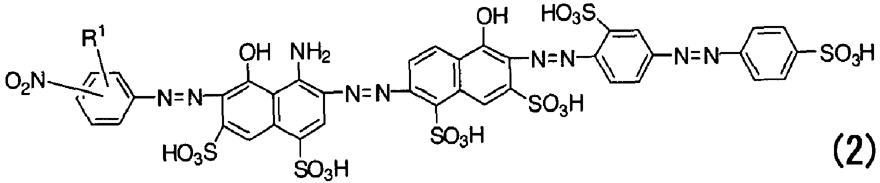 in the formula (2), R¹ is a sulfo group, and when the substitution position of R¹ is the ortho position with respect to the azo group, the substitution position of the nitro group is the para position with respect to the azo group, and when the substitution position of R¹ is the para position with respect to the azo group, the substitution position of the nitro group is the ortho position with respect to the azo group.

The eighth aspect of the invention provides the water-based black ink composition according to any one of the second to seventh aspects, in which the water-based black ink composition further contains (iii) one, or two or more dyes selected from C.I. Direct Yellows 86, 132, and 142, C.I. Direct Oranges 17 and 39, C.I. Direct Reds 80, 84, and 227, C.I. Direct Browns 106 and 195, C.I. Acid Orange 95, and C.I. Acid Reds 249 and 254 as a coloring matter component.

The ninth aspect of the invention provides the water-based black ink composition according to the eighth aspect, in which the water-based black ink composition contains 20 to 70% by mass of (i), 20 to 70% by mass of (ii), and 5 to 50% by mass of (iii) in the total mass of the coloring matter components.

The tenth aspect of the invention provides the water-based black ink composition according to any one of the first to ninth aspects, in which the water-based black ink composition further contains a water-soluble organic solvent.

The eleventh aspect of the invention provides the water-based black ink composition according to any one of the first to tenth aspects, in which the water-based black ink composition further contains urea.

The twelfth aspect of the invention provides an ink jet recording method which uses the water-based black ink composition according to any one of the first to eleventh aspects.

The thirteenth aspect of the invention provides the ink jet recording method according to the twelfth aspect, in which a record-receiving material in the ink jet recording method is a communication sheet.

The fourteenth aspect of the invention provides an ink jet printer loaded with a container containing the water-based black ink composition according to any one of the first to eleventh aspects.

The fifteenth aspect of the invention provides a colored body colored by means of the water-based black ink composition according to any one of the first to eleventh aspects.

### Effects of the Invention

According to the present invention, a water-based black ink composition having high print density, having low reflectance of the near-infrared light region, and being excellent in the property of absorption of near infrared light can be provided.

### PREFERRED MODE FOR CARRYING OUT THE INVENTION

Hereinafter, the present invention will be described in detail.

The water-based black ink composition of the present invention contains (i) C.I. Acid Black 2 as a coloring matter component. By containing this compound, the water-based black ink composition of the present invention can greatly enhance hues, and particularly sensor response in the near-infrared light region in comparison to conventional black ink compositions.

C.I. Acid Black 2 is available from Orient Chemical Industries Co., Ltd. as WATER BLACK R-455 or R-510.

In the water-based black ink composition of the present invention, various dyes besides C.I. Acid Black 2 may be blended as a coloring matter component to adjust the color tone, and particularly (ii) a dye having three or more azo bonds (-N=N-) in the molecule is preferable. When the dye is used, it allows the water-based black ink composition to be very excellent in terms of color development properties, water resistance and light fastness. Furthermore, a black dye having three or more azo bonds (-N=N-) in the molecule is preferably used as the dye, and a black dye having four or more azo bonds (-N=N-) is also preferably used to realize higher color development properties, water resistance and light fastness. In addition, when the black dye represented by the formula (1) is used as the black dye, it allows a balance between color development properties and light fastness, ozone gas resistance and water resistance to be achieved at a high level, and realizes a very excellent water-based black ink composition.

In the black dye represented by the formula (1), the carbon number in an alkyl group, an alkoxy group, an acyl group or the like that is not particularly described with the carbon number is not particularly limited in the range where the effects of the present invention can be achieved, but the carbon number is usually about 1 to 20, and preferably about 1 to 10. More preferably, for an alkyl group, an alkoxy group, or an aliphatic acyl group, the carbon number is about 1 to 4, and for an aromatic acyl group, the carbon number is about 7 to 11. Examples of the aromatic acyl group specifically include a benzoyl group, a naphthoyl group and the like.

Examples of the N-alkylaminosulfonyl group in R¹, R², R⁵, R⁶, and R⁷ in the formula (1) include an N-methylaminosulfonyl group, an N-ethylaminosulfonyl group, an N-(n-butyl)aminosulfonyl group, an N,N-dimethylaminosulfonyl group, an N,N-di(n-propyl)aminosulfonyl group and the like.

Examples of the (C1-C4) alkylsulfonyl group optionally substituted with a hydroxy group in R¹, R², R⁵, R⁶, and R⁷ in the formula (1) include methylsulfonyl, ethylsulfonyl, propylsulfonyl, butylsulfonyl, hydroxyethylsulfonyl, 2-hydroxypropylsulfonyl and the like.

Examples of the acyl group in R¹, R², R⁵, R⁶, and R⁷ in the formula (1) include acetyl, propionyl, butyryl, isobutyryl, benzoyl, naphthoyl and the like.

Examples of the (C1-C4) alkyl group optionally substituted with at least one group selected from the group consisting of a hydroxy group and a (C1-C4) alkoxy group in R¹ to R⁷ in the formula (1) include methyl, ethyl, n-propyl, isopropyl, n-butyl, isobutyl, sec-butyl, tert-butyl, 2-hydroxyethyl, 2-hydroxypropyl, 3-hydroxypropyl, methoxyethyl, 2-ethoxyethyl, n-propoxyethyl, isopropoxyethyl, n-butoxyethyl, methoxypropyl, ethoxypropyl, n-propoxypropyl, isopropoxybutyl, n-propoxybutyl and the like.

Examples of the (C1-C4) alkoxy group optionally substituted with at least one group selected from the group consisting of a hydroxy group, a (C1-C4) alkoxy group, a sulfo group, and a carboxy group in R¹ to R⁷ in the formula (1) include, for example, methoxy, ethoxy, n-propoxy, isopropoxy, n-butoxy, sec-butoxy, tert-butoxy, 2-hydroxyethoxy, 2-hydroxy propoxy, 3-hydroxypropoxy, methoxyethoxy, ethoxyethoxy, n-propoxyethoxy, isopropoxyethoxy, n-butoxyethoxy, methoxypropoxy, ethoxypropoxy, n-propoxypropoxy, isopropoxybutoxy, n-propoxybutoxy, 2-hydroxyethoxyethoxy, carboxymethoxy, 2-carboxyethoxy, 3-carboxypropoxy, 3-sulfopropoxy, 4-sulfobutoxy and the like.

Examples of the acylamino group in R¹ to R⁷ in the formula (1) include acetylamino, propionylamino, butyrylamino, isobutyrylamino, benzoylamino, naphthoylamino and the like.

Examples of the alkylsulfonylamino group in R¹ to R⁷ in the formula (1) include methylsulfonylamino, ethylsulfonylamino, propylsulfonylamino and the like.

Examples of the phenylsulfonylamino group optionally substituted with at least one group selected from the group consisting of a halogen atom, an alkyl group, and a nitro group in R¹ to R⁷ in the formula (1) include benzenesulfonylamino, toluenesulfonylamino, chlorobenzenesulfonylamino, nitrobenzenesulfonylamino and the like.

R¹ and R² in the formula (1) are preferably a hydrogen atom, a chlorine atom, a bromine atom, a cyano group, a carboxy group, a sulfo group, a sulfamoyl group, an N-methylaminosulfonyl group, an N-phenylaminosulfonyl group, a methylsulfonyl group, a hydroxyethylsulfonyl group, a phospho group, a nitro group, an acetyl group, a benzoyl group, a ureido group, a methyl group, a methoxy group, an ethyl group, an ethoxy group, a propyl group, a propoxy group, a 2-hydroxyethoxy group, a 2-methoxyethoxy group, a 2-ethoxyethoxy group, a 3-sulfopropoxy group, a 4-sulfobutoxy group, a carboxymethoxy group, a 2-carboxyethoxy group, an acetylamino group, a benzoylamino group or the like, more preferably a hydrogen atom, a chlorine atom, a cyano group, a sulfamoyl group, an acetyl group, a nitro group, a carboxy group or a sulfo group, and more preferably a hydrogen atom, a carboxy group or a sulfo group.

R¹ is more preferably a carboxy group or a sulfo group, and particularly preferably a sulfo group. R² is particularly preferably a hydrogen atom.

As for the substitution position, the substitution position of the nitro group is preferably the para position with respect to the azo group when the substitution position of R¹ is the ortho position with respect to the azo group, and the substitution position of the nitro group is preferably the ortho position with respect to the azo group when the substitution position of R¹ is the para position with respect to the azo group.

R³ and R⁴ in the formula (1) are preferably a hydrogen atom, a cyano group, a carboxy group, a sulfo group, a nitro group, a methyl group, a methoxy group, an ethyl group, an ethoxy group, a propyl group, a propoxy group, a 2-hydroxyethoxy group, a 2-methoxyethoxy group, a 2-ethoxyethoxy group, a 3-sulfopropoxy group, a 4-sulfobutoxy group, a carboxymethoxy group, a 2-carboxyethoxy group, an acetylamino group or the like, more preferably a hydrogen atom, a carboxy group, a sulfo group, a methyl group, a methoxy group or a 3-sulfopropoxy group, and more preferably a hydrogen atom, a sulfo group, a methyl group or a 3-sulfopropoxy group. Furthermore, a combination of R³, which is a sulfo group, and R⁴, which is a hydrogen atom, or a combination of R³, which is a 3-sulfopropoxy group and R⁴, which is a methyl group, is particularly preferable, and the former is most preferable.

R⁵ to R⁷ in the formula (1) are preferably a hydrogen atom, a chlorine atom, a bromine atom, a cyano group, a carboxy group, a sulfo group, a sulfamoyl group, an N-methylaminosulfonyl group, an N-phenylaminosulfonyl group, a methylsulfonyl group, a hydroxyethylsulfonyl group, a phospho group, a nitro group, an acetyl group, a benzoyl group, a ureido group, a methyl group, a methoxy group, an ethyl group, an ethoxy group, a propyl group, a propoxy group, a 2-hydroxyethoxy group, a 2-methoxyethoxy group, a 2-ethoxyethoxy group, a 3-sulfopropoxy group, a 4-sulfobutoxy group, a carboxymethoxy group, a 2-carboxyethoxy group, an acetylamino group, a benzoylamino group or the like, more preferably a hydrogen atom, a chlorine atom, a cyano group, a sulfamoyl group, an acetyl group, a nitro group, a carboxy group or a sulfo group, and even more preferably a hydrogen atom, a nitro group, a carboxy group or a sulfo group.

R⁵ is particularly preferably a hydrogen atom, a carboxy group, or a sulfo group, and R⁶ is particularly preferably a nitro group, a carboxy group, or a sulfo group, and R⁷ is particularly preferably a hydrogen atom. Furthermore, a combination of R⁵, which is a hydrogen atom, R⁶, which is a sulfo group, and R⁷, which is a hydrogen atom, or a combination of R⁵, which is a sulfo group, R⁶, which is a nitro group, and R⁷, which is a hydrogen atom, is particularly preferable, and the former is most preferable.

R¹ to R⁷ for the black dye represented by the formula (1) are more preferably combinations of the substituents given as examples of those preferred, even more preferably combinations of the preferred substituents and the more preferred substituents, and most preferably combinations of the more preferred substituents.

The black dye represented by the formula (1) is most preferably the black dye represented by the formula (2), which has effects particularly in color development properties, light fastness, ozone gas resistance and water resistance.

Any of the black dye represented by the formula (1) and the black dye represented by the formula (2) may be used as a salt thereof.

The salt of the compound represented by the formula (1) or (2) each independently means a salt of an inorganic or organic cation. Among them, specific examples of the inorganic salt include alkali metal salts, alkaline earth metal salts, and ammonium salts, and the inorganic salt is preferably a lithium, sodium or potassium salt, and an ammonium salt. Furthermore, examples of the salt of the organic cation include salts of the compound represented by the following formula (3), but are not limited thereto.

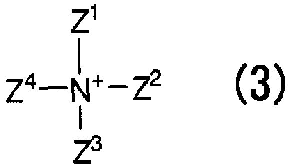

In the formula (3), Z¹, Z², Z³, and Z⁴ each independently represent a group selected from the group consisting of a hydrogen atom, an alkyl group, a hydroxyalkyl group, and a hydroxyalkoxyalkyl group, and at least one is a group besides a hydrogen atom.

The alkyl group of Z¹, Z², Z³, and Z⁴ in the formula (3) is preferably a (C1-C4) alkyl group, and specific examples include methyl, ethyl, n-propyl, isopropyl, n-butyl, isobutyl, sec-butyl, tert-butyl and the like.

Examples of the hydroxyalkyl group include hydroxy-(C1-C4) alkyl groups such as hydroxymethyl, hydroxyethyl, 3-hydroxypropyl, 2-hydroxypropyl, 4-hydroxybutyl, 3-hydroxybutyl and 2-hydroxybutyl.

Examples of the hydroxyalkoxyalkyl group include hydroxy (C1-C4) alkoxy-(C1-C4) alkyl groups such as hydroxyethoxymethyl, 2-hydroxyethoxyethyl, 3-hydroxyethoxypropyl, 2-hydroxyethoxypropyl, 4-hydroxyethoxybutyl, 3-hydroxyethoxybutyl and 2-hydroxyethoxybutyl. Among these, the hydroxyalkoxyalkyl group is preferably a hydroxyethoxy-(C1-C4) alkyl group.

Particularly preferred examples include a hydrogen atom; methyl; hydroxy-(C1-C4) alkyl groups such as hydroxymethyl, hydroxyethyl, 3-hydroxypropyl, 2-hydroxypropyl, 4-hydroxybutyl, 3-hydroxybutyl and 2-hydroxybutyl; and hydroxyethoxy-(C1-C4) alkyl groups such as hydroxyethoxymethyl, 2-hydroxyethoxyethyl, 3-hydroxyethoxypropyl, 2-hydroxyethoxypropyl, 4-hydroxyethoxybutyl, 3-hydroxyethoxybutyl and 2-hydroxyethoxybutyl.

Specific examples of Z¹, Z², Z³, and Z⁴ in the formula (3) are shown in the following Table 1.

**[Table 1]**

| Compound No. | Z¹ | Z² | Z³ | Z⁴ |
|---|---|---|---|---|
| 1-1 | H | CH3 | CH3 | CH3 |
| 1-2 | CH3 | CH3 | CH3 | CH3 |
| 1-3 | H | -C2H4OH | -C2H4OH | -C2H4OH |
| 1-4 | CH3 | -C2H4OH | -C2H4OH | -C2H4OH |
| 1-5 | H | -CH2CH(OH)CH3 | -CH2CH(OH)CH3 | -CH2CH(OH)CH3 |
| 1-6 | CH3 | -CH2CH(OH)CH3 | -CH2CH(OH)CH3 | -CH2CH(OH)CH3 |
| 1-7 | H | -C2H4OH | H | -C2H4OH |
| 1-8 | CH3 | -C2H4OH | H | -C2H4OH |
| 1-9 | H | -CH2CH(OH)CH3 | H | -CH2CH(OH)CH3 |
| 1-10 | CH3 | -CH2CH(OH)CH3 | H | -CH2CH(OH)CH3 |
| 1-11 | CH3 | -C2H4OH | CH3 | -C2H4OH |
| 1-12 | CH3 | -CH2CH(OH)CH3 | CH3 | -CH2CH(OH)CH3 |

Preferred examples of the salt of the organic cation include monoethanol amine salts, diethanol amine salts, triethanol amine salts, monoisopropanol amine salts, diisopropanol amine salts and triisopropanol amine salts.

Among the salts of the inorganic and organic cations, particularly preferred examples are lithium and sodium salts.

The black dye represented by the formula (1) can be synthesized by the following method, for example. The structural formulae of the compounds in each process are represented in a form of a free acid.

First, a compound represented by the following formula (4) and p-toluenesulfonyl chloride are subjected to the reaction in the presence of alkali. Thus, a compound represented by the following formula (5) is obtained, which is diazotized by a routine method.

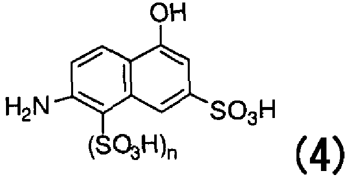

In the formula, n has the same meanings as that in the formula (1).

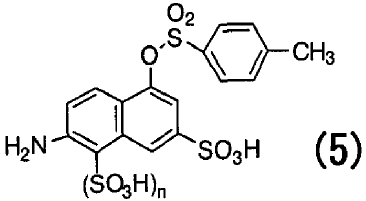

In the formula, n has the same meanings as that in the formula (1).

Then, the obtained diazo compound and 4-amino-5-naphthol-1,7-disulfonic acid are subjected to a coupling reaction in acid. Thus, a compound represented by the following formula (6) is obtained.

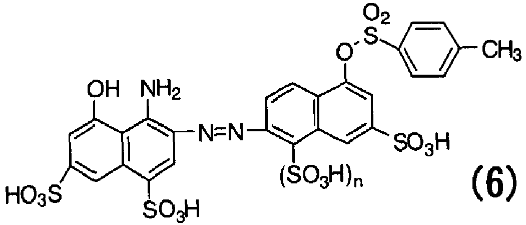

In the formula, n has the same meanings as that in the formula (1).

Then, a compound represented by the following formula (7) is diazotized by a routine method, and the obtained diazo compound and the compound represented by the formula (6) are subjected to a coupling reaction. Thus, a compound represented by the following formula (8) is obtained.

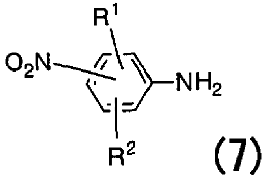

In the formula, R¹ and R² have the same meanings as those in the formula (1).

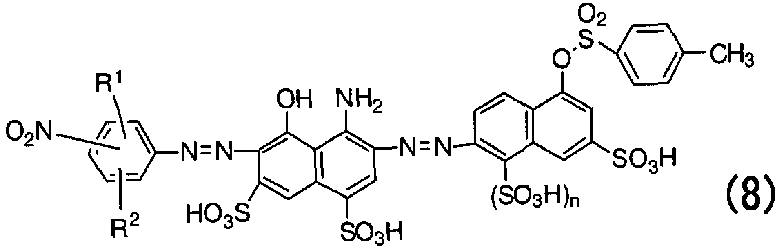

In the formula, R¹, R², and n have the same meanings as those in the formula (1).

Then, the compound represented by the formula (8) is hydrolyzed under alkali conditions. Thus, a compound represented by the following formula (9) is obtained.

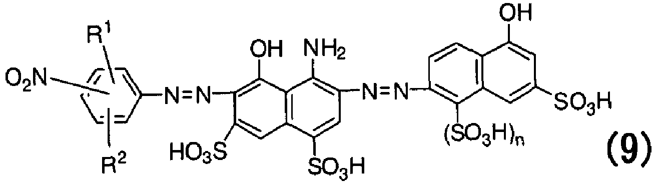

In the formula, R¹, R², and n have the same meanings as those in the formula (1).

Then, a monoazo compound represented by the following formula (10) is diazotized by a routine method, and the obtained diazo compound and the compound represented by the formula (9) are subjected to a coupling reaction. Thus, the black dye represented by the formula (1) or (2) or a salt thereof can be obtained.

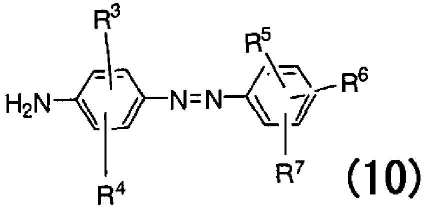

In the formula, R³ to R⁷ have the same meanings as those in the formula (1).

The monoazo compound represented by the formula (10) can be synthesized by a routine method. For example, a compound represented by the following formula (11) is diazotized by a routine method, and the obtained diazo compound and a compound represented by the following formula (12) are subjected to a coupling reaction. Thus, the monoazo compound represented by the formula (10) can be obtained.

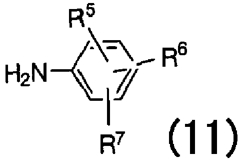

In the formula, R⁵ to R⁷ have the same meanings as those in the formula (1).

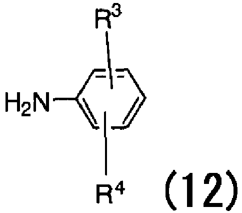

In the formula, R³ and R⁴ have the same meanings as those in the formula (1).

Alternatively, a compound represented by the following formula (13) is diazotized by a routine method, and the obtained diazo compound and a compound represented by the following formula (14) are subjected to a coupling reaction, whereby to obtain a compound represented by the following formula (15). Then, this compound is subjected to hydrolysis with an acid or alkali. Thus, the monoazo compound represented by the formula (15) can be obtained.

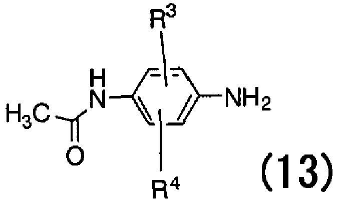

In the formula, R³ and R⁴ have the same meanings as those in the formula (1).

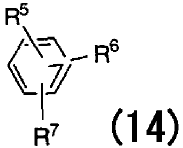

In the formula, R⁵ to R⁷ have the same meanings as those in the formula (1).

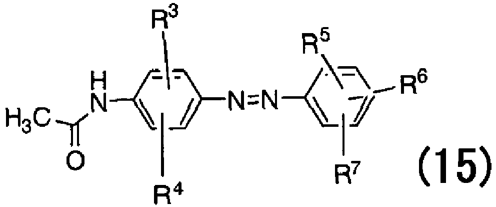

In the formula, R³ to R⁷ have the same meanings as those in the formula (1).

The esterification reaction between the compound represented by the formula (4) and p-toluenesulfonyl chloride is carried out by a method that is known per se. It is advantageous to carry out the reaction in water or a water-soluble organic solvent at a temperature of, for example, 20 to 100°C, preferably 30 to 80°C, and at a pH value of neutral to alkaline. The reaction is carried out preferably at a pH value of neutral to weak alkaline, for example, pH 7 to 10. Adjustment to this pH value is carried out by adding a base. Examples of the base that can be used include alkali metal hydroxides such as lithium hydroxide and sodium hydroxide, alkali metal carbonates such as lithium carbonate, sodium carbonate and potassium carbonate, acetates such as sodium acetate and the like. The compound represented by the formula (4) and p-toluenesulfonyl chloride are used in nearly stoichiometric amounts.

The diazotization of the compound represented by the formula (5) is carried out by a method that is known per se. For example, the diazotization is carried out in an inorganic acid medium at a temperature of -5 to 30°C, and preferably 5 to 15°C using a nitrous acid salt, for example, a nitric acid alkali metal salt such as sodium nitrite.

The coupling reaction between a diazotization product of the compound represented by the formula (5) and 4-amino-5-naphthol-1,7-disulfonic acid is carried out under conditions that are known per se. For example, it is advantageous to carry out the reaction in water or a water-soluble organic solvent at a temperature of -5 to 30°C, preferably 5 to 25°C, and at a pH value of acidic to neutral. The coupling bath is acidified, and the coupling reaction is carried out preferably at a pH value of acidic to weakly acidic, for example, pH 1 to 4. Adjustment to this pH value is carried out by adding a base. Examples of the base that can be used include alkali metal hydroxides such as lithium hydroxide and sodium hydroxide, alkali metal carbonates such as lithium carbonate, sodium carbonate and potassium carbonate, acetates such as sodium acetate, ammonia, organic amines and the like. The compound represented by the formula (5) and 4-amino-5-naphthol-1,7-disulfonic acid are used in nearly stoichiometric amounts.

The diazotization of the compound represented by the formula (7) is also carried out by a method that is known per se. For example, the diazotization is carried out in an inorganic acid medium at a temperature of -5 to 30°C, preferably 0 to 15°C using a nitrous acid salt, for example, a nitric acid alkali metal salt such as sodium nitrite.

The coupling reaction between a diazotization product of the compound represented by the formula (7) and the compound represented by the formula (6) is also carried out under conditions that are known per se. For example, it is advantageous to carry out the reaction in water or a water-soluble organic solvent at a temperature of -5 to 30°C, preferably 10 to 25°C, and at a pH value of weakly acidic to alkaline. The reaction is carried out preferably at a pH value of weakly acidic to weak alkaline, for example, pH 5 to 10, and adjustment of the pH value is carried out by adding a base. Examples of the base that can be used include alkali metal hydroxides such as lithium hydroxide and sodium hydroxide, alkali metal carbonates such as lithium carbonate, sodium carbonate and potassium carbonate, acetates such as sodium acetate, ammonia, organic amines and the like. A diazotization product of the compound represented by the formula (7) and the compound represented by the formula (6) are used in nearly stoichiometric amounts.

Production of the compound represented by the formula (9) by hydrolyzing the compound represented by the formula (8) is also carried out by a method that is known per se. The method is advantageously a method by heating in an aqueous alkaline medium, which is carried out, for example, by adding sodium hydroxide or potassium hydroxide to a solution containing the compound represented by the formula (8) to render the pH to be 9.5 or more, and then heating the solution to, for example, a temperature of 20 to 150°C, preferably a temperature of 30 to 100°C. At this time, the pH value of the reaction solution is preferably maintained at 9.5 to 11.5. Adjustment to this pH value is carried out by adding a base. Those described above can be used as the base.

The diazotization of the compound represented by the formula (10) is also carried out by a method that is known per se. The diazotization is carried out, for example, using a nitrous acid salt, for example, a nitric acid alkali metal salt such as sodium nitrite in an inorganic acid medium at a temperature of -5 to 30°C, preferably 0 to 15°C.

The coupling reaction between a diazotization product of the compound represented by the formula (10) and the compound represented by the formula (9) is also carried out under conditions that are known per se. For example, it is advantageous to carry out the reaction in water or a water-soluble organic solvent at a temperature of -5 to 30°C, preferably 10 to 25°C, and at a pH value of weakly acidic to alkaline. The reaction is carried out preferably at a pH value of weakly acidic to weak alkaline, for example, at pH 5 to 10. Adjustment to the pH value is carried out by adding a base. Examples of the base that can be used include alkali metal hydroxides such as lithium hydroxide and sodium hydroxide, alkali metal carbonates such as lithium carbonate, sodium carbonate and potassium carbonate, acetates such as sodium acetate, ammonia, organic amines and the like. A diazotization product of the compound represented by the formula (10) and the compound represented by the formula (9) are used in nearly stoichiometric amounts.

The black dye represented by the formula (1) or (2) can be isolated in a form of a free acid by adding a mineral acid after the coupling reaction, from which inorganic salts can be removed by washing the black dye with water or acidified water. Then, the thus-obtained acid type dye having low salt content can be converted to a solution of the corresponding salt by being neutralized with a desired inorganic or organic base in an aqueous medium. Examples of the inorganic base include alkali metal hydroxides such as lithium hydroxide, sodium hydroxide and potassium hydroxide, ammonium hydroxides, or alkali metal carbonates such as lithium carbonate, sodium carbonate and potassium carbonate. Examples of the organic base include organic amines such as alkanol amines (diethanol amine and triethanol amine, and the like), but are not limited thereto.

Suitable specific examples of the compound represented by the formula (1) are shown in Tables 2 to 4. However, the compound represented by the formula (1) is not particularly limited thereto.

**[Table 2]**

| Compound No. | Structure |
|---|---|
| 1 | 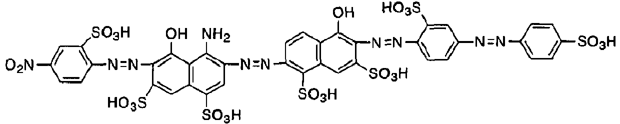 |
| 2 | 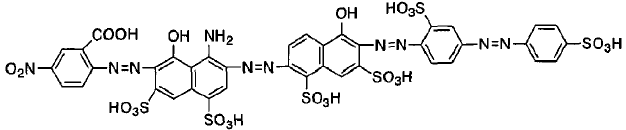 |
| 3 | 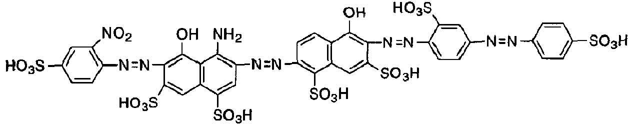 |
| 4 | 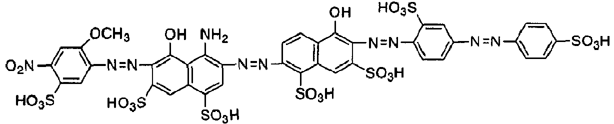 |
| 5 | 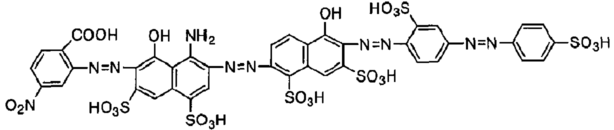 |
| 6 | 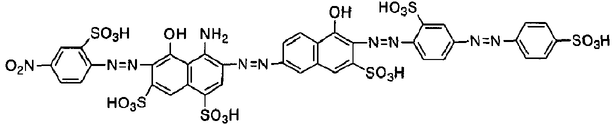 |
| 7 | 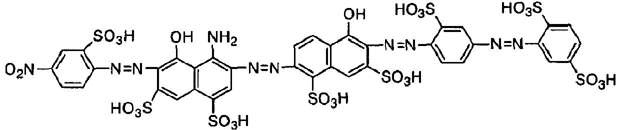 |

**[Table 3]**

| Compound No. | Structure |
|---|---|
| 8 | 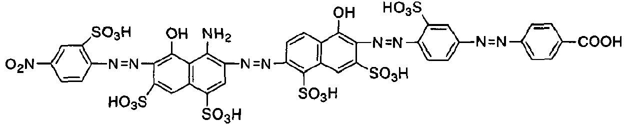 |
| 9 | 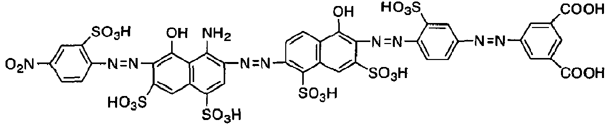 |
| 10 | 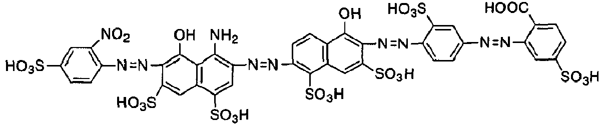 |
| 11 | 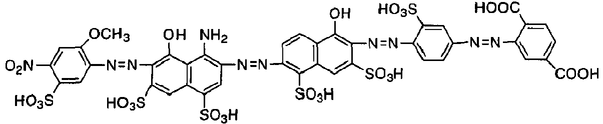 |
| 12 | 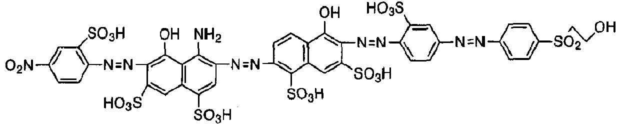 |
| 13 | 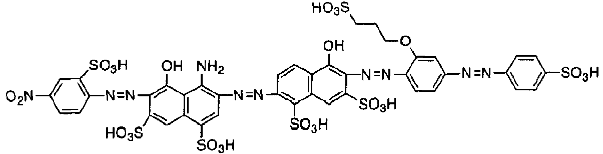 |
| 14 | 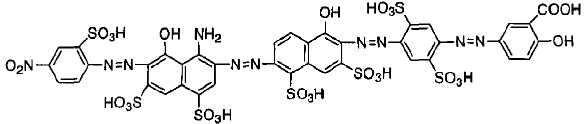 |

**[Table 4]**

| Compound No. | Structure |
|---|---|
| 15 | 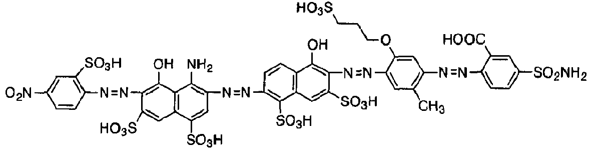 |
| 16 | 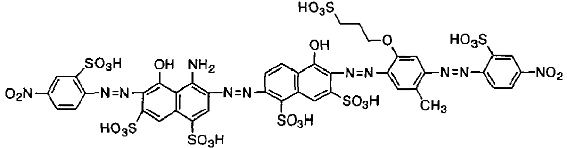 |
| 17 | 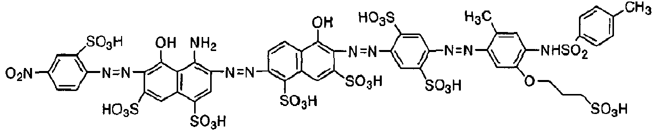 |
| 18 | 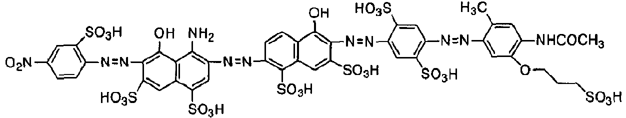 |
| 19 | 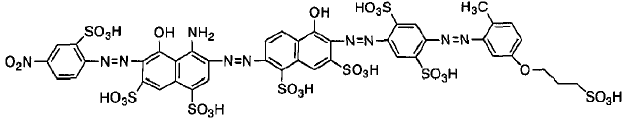 |
| 20 | 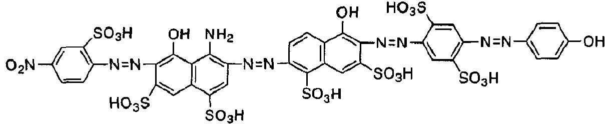 |
| 21 | 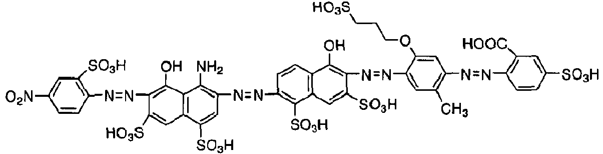 |

The water-based black ink composition of the present invention contains 0.1 to 10% by mass, preferably 0.5 to 5% by mass, further preferably 1 to 4% by mass of (i) C.I. Acid Black 2, and water as a major medium. Furthermore, when the water-based black ink composition of the present invention contains the compound represented by the formula (1) or (2) as the (ii) black dye, the content is 0.1 to 20% by mass, preferably 1 to 10% by mass, more preferably 2 to 8% by mass.

In the case where the water-based black ink composition of the present invention is used as an ink for an ink jet printer, it is preferable to use C.I. Acid Black 2 or the compound represented by the formula (1) or (2) having low contents of inorganic impurities such as chlorides of metal cations and sulfates. The criteria for the content include, for example, about 1% by mass or less (relative to the technical product of the dye). As a method of producing the dye with less inorganic impurities, for example, desalting treatment may be carried out by an ordinary method of using a reverse osmosis membrane; a method of stirring a dried product or a wet cake of a dye in a mixed solvent of alcohol such as methanol and water, filtering and isolating the precipitate, and drying the product, or the like.

The water-based black ink composition of the present invention may also contain (iii) a dye having other hues for the purpose of adjusting the color tone. The other dye is preferably a reactive dye, an acidic dye, or a direct dye, more preferably a direct dye from the viewpoint of dyeing affinity to the record-receiving material of a dye.

Specific examples of the reactive dye that may be contained in the water-based black ink composition of the present invention include yellow based dyes such as C.I. Reactive Yellow 2, 3, 18, 81, 84, 85, 95, 99 and 102; orange based dyes such as C.I. Reactive Orange 5, 9, 12, 13, 35, 45 and 99; brown based dyes such as C.I. Reactive Brown 2, 8, 9, 17 and 33; red based dyes such as C.I. Reactive Red 3, 3:1, 4, 13, 24, 29, 31, 33, 125, 151, 206, 218, 226 and 245; violet based dyes such as C.I. Reactive Violet 1 and 24; blue based dyes such as C.I. Reactive Blue 2, 5, 10, 13, 14, 15, 15:1, 49, 63, 71, 72, 75, 162 and 176; green based dyes such as C.I. Reactive Green 5, 8 and 19; black based dyes such as C.I. Reactive Black 1, 8, 23 and 39; and the like.

Specific examples of the acidic dye that may be contained in the water-based black ink composition of the present invention include yellow based dyes such as C.I. Acid Yellow 1, 3, 11, 17, 18, 19, 23, 25, 36, 38, 40, 40:1, 42, 44, 49, 59, 59:1, 61, 65, 72, 73, 79, 99, 104, 110, 159, 169, 176, 184, 193, 200, 204, 207, 215, 219, 219:1, 220, 230, 232, 235, 241, 242 and 246; orange based dyes such as C.I. Acid Orange 3, 7, 8, 10, 19, 24, 51, 56, 67, 74, 80, 86, 87, 88, 89, 94, 95, 107, 108, 116, 122, 127, 140, 142, 144, 149, 152, 156, 162, 166 and 168; brown based dyes such as C.I. Acid Brown 2, 4, 13, 14, 19, 28, 44, 123, 224, 226, 227, 248, 282, 283, 289, 294, 297, 298, 301, 355, 357 and 413; red based dyes such as C.I. Acid Red 1, 6, 8, 9, 13, 18, 27, 35, 37, 52, 54, 57, 73, 82, 88, 97, 97:1, 106, 111, 114, 118, 119, 127, 131, 138, 143, 145, 151, 183, 195, 198, 211, 215, 217, 225, 226, 249, 251, 254, 256, 257, 260, 261, 264, 265, 266, 274, 276, 277, 289, 296, 299, 315, 318, 336, 337, 357, 359, 361, 362, 364, 366, 399, 407 and 415; violet based dyes such as C.I. Acid Violet 17, 19, 21, 42, 43, 47, 48, 49, 54, 66, 78, 90, 97, 102, 109 and 126; blue based dyes such as C.I. Acid Blue 1, 7, 9, 15, 23, 25, 40, 61:1, 62, 72, 74, 80, 83, 90, 92, 103, 104, 112, 113, 114, 120, 127, 127:1, 128, 129, 138, 140, 142, 156, 158, 171, 182, 185, 193, 199, 201, 203, 204, 205, 207, 209, 220, 221, 224, 225, 229, 230, 239, 249, 258, 260, 264, 277:1, 278, 279, 280, 284, 290, 296, 298, 300, 317, 324, 333, 335, 338, 342 and 350; green based dyes such as C.I. Acid Green 1, 9, 12, 16, 19, 20, 25, 27, 28, 40, 43, 56, 73, 81, 84, 104, 108 and 109; black based dyes such as C.I. Acid Black 1, 2, 3, 24, 24:1, 26, 31, 50, 52, 52:1, 58, 60, 63, 107, 109, 112, 119, 132, 140, 155, 172, 187, 188, 194, 207 and 222; and the like.

Specific examples of the direct dye that may be contained in the water-based black ink composition of the present invention include yellow based dyes such as C.I. Direct Yellow 8, 11, 12, 21, 28, 33, 39, 44, 49, 50, 85, 86, 87, 88, 89, 98, 100, 110, 132, 142, 144 and 146; orange based dyes such as C.I. Direct Orange 17, 26, 39 and 102; red based dyes such as C.I. Direct Red 2, 4, 6, 9, 17, 23, 26, 28, 31, 39, 54, 55, 57, 62, 63, 64, 65, 68, 72, 75, 76, 79, 80, 81, 83, 83:1, 84, 89, 92, 95, 99, 111, 141, 173, 180, 184, 207, 211, 212, 214, 218, 221, 223, 224, 225, 226, 227, 232, 233, 240, 241, 242, 243 and 247; violet based dyes such as C.I. Direct Violet 7, 9, 47, 48, 51, 66, 90, 93, 94, 95, 98, 100 and 101; blue based dyes such as C.I. Direct Blue 1, 15, 22, 25, 41, 76, 77, 80, 86, 87, 90, 98, 106, 108, 120, 158, 163, 168, 199, 200, 201, 202 and 226; brown based dyes such as C.I. Direct Brown 106, 125 and 195; black based dyes such as C.I. Direct Black 17, 19, 22, 31, 32, 51, 62, 71, 74, 112, 113, 154, 168 and 195; and the like.

Among these dyes for the color toning, suitable examples are C.I. Direct Yellow 86, 132 and 142; C.I. Direct Orange 17 and 39; C.I. Direct Red 80, 84 and 227; C.I. Direct Brown 106, 125 and 195; C.I. Direct Orange 95; C.I. Direct Red 249 and 254 since when one, or two or more dyes selected from them are contained in the water-based black ink composition of the present invention, the water-based black ink composition of the present invention has even wider color reproducibility width.

When the other dye (iii) is contained in the water-based black ink composition of the present invention, the water-based black ink composition of the present invention preferably contains 20 to 70% by mass of (i), 20 to 70% by mass of (ii), and 5 to 50% by mass of (iii), and more particularly preferably 30 to 60% by mass of (i), 30 to 60% by mass of (ii), and 5 to 20% by mass of (iii) in the total mass of the coloring matter component (I).

The water-based black ink composition of the present invention is prepared by using water as a medium, so that the water-based black ink composition may suitably contain a water-soluble organic solvent (organic solvent that is miscible with water) or ink preparation agents if necessary to the extent that the effect of the present invention is not impaired. Meanwhile, the pH of the ink composition is preferably pH 6 to 10, and more preferably pH 7 to 10 from the aspect of enhancing storage stability. Furthermore, the surface tension of the coloring composition is preferably 25 to 70 mN/m, and more preferably 25 to 60 mN/m. In addition, the viscosity of the coloring composition is preferably 30 mPa·s or less, and more preferably 20 mPa·s or less.

Examples of the water-soluble organic solvent used in preparation of the water-based black ink composition include C1-C4 alkanols such as methanol, ethanol, propanol, isopropanol, butanol, isobutanol, secondary butanol and tertiary butanol; carboxylic amides such as N,N-dimethylformamide and N,N-dimethylacetamide; lactams such as 2-pyrrolidone and N-methylpyrrolidin-2-one; cyclic ureas such as 1,3-dimethylimidazolidin-2-one and 1,3-dimethylhexahydropyrimid-2-one; ketones or keto alcohols such as acetone, methylethyl ketone and 2-methyl-2-hydroxypentan-4-one; cyclic ethers such as tetrahydrofuran and dioxane; mono-, oligo-, or polyalkylene glycols or thioglycols having a (C2-C6) alkylene unit such as ethylene glycol, 1,2-propylene glycol, 1,3-propylene glycol, 1,2-butylene glycol, 1,4-butylene glycol, 1,6-hexylene glycol, diethylene glycol, triethylene glycol, tetraethylene glycol, dipropylene glycol, polyethylene glycol, polypropylene glycol, thiodiglycol and dithiodiglycol; polyols (triol) such as glycerin and hexane-1,2,6-triol; (C1-C4) alkyl ethers of polyhydric alcohols such as ethylene glycol monomethyl ether, ethylene glycol monoethyl ether, diethylene glycol monomethyl ether, diethylene glycol monoethyl ether, diethylene glycol monobutyl ether (butyl carbitol), triethylene glycol monomethyl ether and triethylene glycol monoethyl ether; γ-butyrolactone; dimethyl sulfoxide; and the like. The water-soluble organic solvent is preferably 2-pyrrolidone, isopropyl alcohol, glycerin, diglycerin, butyl carbitol, ethylene glycol, diethylene glycol or propylene glycol, and more preferably 2-pyrrolidone, isopropyl alcohol, glycerin or butyl carbitol. These organic solvents may be used alone, or in a combination of two kinds or more.

The content of the water-soluble solvent in the total amount of the water-based black ink composition of the present invention is preferably 0 to 50% by mass, and more preferably 25 to 50% by mass.

Examples of the ink preparation agents used in the preparation of the water-based black ink composition include a fungicide, a preservative, a pH adjusting agent, a chelating reagent, a rust-preventive agent, a water-soluble ultraviolet light absorbing agent, a water-soluble polymer compound, a dye solubilizer, an oxidation-preventive agent, a surfactant and the like.

Examples of the fungicide include sodium dehydroacetate, sodium benzoate, sodium pyridine thione-1-oxide, p-hydroxybenzoate ethyl ester, 1,2-benzisothiazolin-3-one, and salts thereof and the like. These are preferably used at a proportion of 0.02 to 1.00% by mass in the water-based black ink composition.

Examples of the preservative include organic sulfur-based, organic nitrogen sulfur-based, organic halogen-based, haloallylsulfone-based, iodopropargyl-based, N-haloalkylthio-based, nitrile-based, pyridine-based, 8-oxyquinoline-based, benzothiazole-based, isothiazoline-based, dithiol-based, pyridineoxide-based, nitropropane-based, organic tin-based, phenol-based, quaternary ammonium salt-based, triazine-based, thiazine-based, anilide-based, adamantane-based, dithiocarbamate-based, brominated indanone-based, benzylbromoacetate-based, inorganic salt-based compounds and the like. Examples of the organic halogen-based compound include sodium pentachlorophenol. Examples of the pyridineoxide-based compound include sodium 2-pyridinethiol-1-oxide. Examples of the inorganic salt-based compound include acetic anhydride soda. Examples of the isothiazoline-based compound include 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, 2-methyl-4-isothiazolin-3-one calcium chloride and the like. Examples of the other preservative fungicide include sorbic acid soda, sodium benzoate and the like.

An arbitrary substance can be used as the pH adjusting agent as long as the pH of the ink can be controlled to fall within the range of, for example, 5 to 11 without bad influences on the ink to be prepared. Examples thereof include, for example, alkanol amines such as diethanol amine, triethanol amine and N-methyl diethanol amine; alkali metal hydroxides such as lithium hydroxide, sodium hydroxide and potassium hydroxide; ammonium hydroxide (ammonia); alkali metal carbonates such as lithium carbonate, sodium carbonate, sodium hydrogen carbonate and potassium carbonate; inorganic bases such as potassium acetate, sodium silicate, disodium phosphate; and the like.

Examples of the chelating reagent include sodium ethylene diamine tetraacetate, nitrilo sodium triacetate, sodium hydroxyethylethylene diamine triacetate, sodium diethylene triamine pentaacetate, sodium uracil diacetate and the like.

Examples of the rust-preventive agent include acidic sulfite, sodium thiosulfate, ammonium thioglycolate, diisopropylammonium nitrite, pentaerythritol tetranitrate, dicyclohexyl ammonium nitrite and the like.

Examples of the water-soluble ultraviolet light absorbing agent include sulfonated benzophenone based compounds, benzotriazole based compounds, salicylic acid based compounds, cinnamic acid based compounds and triazine based compounds.

Examples of the water-soluble polymer compound include polyvinyl alcohol, cellulose derivatives, polyamine, polyimine and the like.

Examples of the dye solubilizer include ε-caprolactam, ethylene carbonate, urea and the like. In one of the preferable aspects of the present invention, the water-based black ink composition of the present invention particularly contains urea.

Various organic based and metal complex based fading-preventive agents can be used, for example, as the oxidation-preventive agent. Examples of the organic based fading-preventive agent include hydroquinones, alkoxy phenols, dialkoxy phenols, phenols, anilines, amines, indanes, chromanes, alkoxy anilines, heterocycles and the like.

Examples of the surfactant include, for example, known surfactants such as anionic based surfactants, cationic based surfactants and nonionic based surfactants.

Examples of the anionic surfactant include alkyl sulfonic acid salts, alkylcarboxylic acid salts, α-olefinsulfonic acid salts, polyoxyethylene alkyl ether acetic acid salts, N-acylamino acid and salts thereof, N-acylmethyltaurine salts, alkylsulfate polyoxyalkyl ether sulfuric acid salts, alkylsulfate polyoxyethylene alkyl ether phosphoric acid salts, rosin acid soap, castor oil sulfate ester salts, lauryl alcohol sulfate ester salts, alkylphenolic phosphate esters, alkylated phosphate esters, alkylarylsulfonic acid salts, diethylsulfosuccinic acid salts, diethylhexyl sulfosuccinic acid, dioctylsulfosuccinic acid salt and the like.

Examples of the cationic surfactant include 2-vinyl pyridine derivatives, poly(4-vinyl pyridine) derivatives and the like.

Examples of the amphoteric surfactant include lauryl dimethylaminoacetate betaine, 2-alkyl-N-carboxymethyl-N-hydroxyethyl imidazolinium betaine, coconut oil fatty acid amide propyldimethylaminoacetate betaine, polyoctylpolyaminoethyl glycine, imidazoline derivatives and the like.

Examples of the nonionic surfactant include: ether based surfactants such as polyoxyethylene nonylphenyl ether, polyoxyethylene octylphenyl ether, polyoxyethylene dodecyl phenyl ether, polyoxyethylene oleyl ether, polyoxyethylene lauryl ether, polyoxyethylene alkyl ether and polyoxyarylkylalkyl ether; ester based surfactants such as polyoxyethylene oleic acid, polyoxyethylene oleate ester, polyoxyethylene distearate ester, sorbitan laurate, sorbitan monostearate, sorbitan monooleate, sorbitan sesquioleate, polyoxyethylene monooleate and polyoxyethylene stearate; acetylene glycol based surfactants such as 2,4,7,9-tetramethyl-5-decyne-4,7-diol, 3,6-dimethyl-4-octyne-3,6-diol and 3,5-dimethyl-1-hexyn-3-ol (for example, Surfynol^{RTM} 104, 105, 82, 420, 440 and 465; and Olfine^{RTM} STG and the like, all manufactured by Nissin Chemical Industry Co., Ltd.); and the like. Among these, Surfynol^{RTM} 420, 440 and 465 are preferably used, and Surfynol^{RTM} 440 is particularly preferably used. As used herein, the superscript notation "RTM" means a registered trademark.

These ink preparation agents are used singly or as mixtures.

For the preparation of the water-based black ink composition of the present invention, there are no particular limitations on the order of dissolving respective agents such as additives. The water used at the time of preparing the water-based black ink composition is preferably water with low levels of impurities, such as ion-exchanged water or distilled water. Furthermore, if necessary, any contaminants in the ink composition may be removed by performing precision filtration using a membrane filter and the like after the preparation of the ink composition. Particularly, in the case of using the water-based black ink composition of the present invention as an ink for ink jet recording, it is preferable to perform precision filtration. The pore size of the filter that is used to perform precision filtration is usually 1 µm to 0.1 µm, and preferably 0.8 µm to 0.1 µm.

The water-based black ink composition of the present invention can be used in various fields, and is suitable as an aqueous ink for writing materials, aqueous printing ink, information recording ink and the like. The water-based black ink composition of the present invention is particularly preferably used as an ink jet ink containing the ink composition, which is suitably used in the ink jet recording method of the present invention described below.

The ink jet recording method of the present invention will be described below. The ink jet recording method of the present invention is characterized by carrying out recording using the water-based black ink composition of the present invention as an ink jet ink. In the ink jet recording method of the present invention, the recording on a record-receiving material is carried out using the water-based black ink composition of the present invention. At the time, the ink nozzles and the like used are not particularly limited and can be appropriately selected in accordance with the purpose. Examples of the recording method that may be used include known systems, for example, a charge control system which utilizes electrostatic attraction to discharge the ink; a drop-on-demand system (pressure pulse system) which utilizes vibration pressure of a piezo device; an acoustic ink jet system which changes an electric signal to an acoustic beam and irradiates the ink with the acoustic beam, and utilizes the radiation pressure to discharge the ink; a thermal ink jet, a Bubblejet (registered trademark) system which forms bubbles by heating the ink, and utilizes generated pressure; and the like. Meanwhile, the ink jet recording system encompasses a system which injects an ink having low density, which is called a photo ink, for many times with small volumes; a system which utilizes multiple inks having different densities of coloring matter in an ink with a substantially identical hue to improve the image quality; a system which utilizes a colorless transparent ink; and the like.

The colored body of the present invention is that colored by means of the water-based black ink composition of the present invention, more preferably that colored by means of an ink jet printer using the water-based black ink composition of the present invention. Examples of those that can be colored include communication sheets such as paper and films; fabrics or clothes (cellulose, nylon, wool and the like), leather, and base materials for color filters. Preferred examples of the communication sheets include surface-treated sheets, more specifically, sheets provided with an ink-receiving layer on a base material such as a paper, a synthetic paper or a film. The ink-receiving layer is provided by, for example, impregnating or coating the base material with a cationic polymer, or coating the surface of the base material with porous white inorganic substances capable of absorbing the dye in the ink, such as porous silica, an alumina sol or a special ceramic substance, together with a hydrophilic polymer such as polyvinyl alcohol or polyvinyl pyrrolidone. Those provided with such an ink-receiving layer are generally referred to as exclusive ink jet paper (film), glossy paper (film) and the like. Representative examples of commercial products include PICTORICO (manufactured by ASAHI GLASS CO., LTD.); Professional Photo Paper, Super Photo Paper, Matte Photo Paper, glossy Gold, Platinum Grade (all manufactured by Canon, Inc.); Photo Paper (glossy), Photo Matte paper, Photo Paper Crispia^{RTM} (high glossy) (all manufactured by Seiko Epson Corp.); Premium Plus Photo Paper, Premium glossy film, Photo Paper, Advanced Photo Paper (all manufactured by Hewlett-Packard Japan, Ltd.); Photolike QP (manufactured by Konica Minolta, Inc.); Kassai Photo Finish Pro (manufactured by Fujifilm Corporation); and the like. In addition, plain paper, fine quality paper or coated paper can be used, of course.

It is known that discoloration and fading of images by ozone gas increases when they are recorded particularly on a record-receiving material coated with porous white inorganic substances on the surface among these materials. However, the water-based black ink composition of the present invention is also excellent in ozone gas resistance, and thus exerts its effects at the time of such recording on the record-receiving materials.

In recording with the ink jet recording method of the present invention on a record-receiving material, for example, a container containing the ink composition described above is loaded at a predetermined position in an ink jet printer, and recording may be performed on the record-receiving material with the ordinary recording method. The ink jet recording method of the present invention can be used, with the water-based black ink composition of the present invention, a well known and used magenta ink composition, cyan ink composition, yellow ink composition, as necessary, a green ink composition, blue (or violet) ink composition, and red (or orange) ink composition in combination. The ink compositions of respective colors are filled into their respective containers, and the respective containers are loaded at a predetermined position of the ink jet printer, similarly to the container containing the water-based black ink composition of the present invention. Examples of the ink jet printer include, for example, a piezo system printer utilizing mechanical vibration, a Bubblejet (registered trademark) system printer utilizing bubbles by heating, and the like.

The water-based black ink composition of the present invention produces black recorded images that are very vivid, and have high chroma and print density, and ideal hue on a record-receiving material such as plain paper and on a communication sheet having an ink-receiving layer. For this reason, the water-based black ink composition of the present invention can also reliably reproduce photographic tone color images on paper. Furthermore, the water-based black ink composition of the present invention has no solid precipitation, no change in physical property, no change in hue and the like after storage for a long time, and has excellent storage stability.

The water-based black ink composition of the present invention is used for ink jet recording or for writing materials. Particularly, even when used as an ink jet ink, the water-based black ink composition of the present invention does not easily cause solid precipitation by the drying of the ink composition in the vicinity of the nozzles, and so blockage of the injector (recording head) also does not occur. Furthermore, the water-based black ink composition of the present invention does not involve changes in physical properties when the ink is recirculated and used for a relatively long time period when using a continuous type ink jet printer, or when the ink is intermittently used by an on-demand type ink jet printer.

In addition, the images recorded with the water-based black ink composition of the present invention on a communication sheet having an ink-receiving layer are good in various fastness properties such as water resistance, moisture resistance, ozone gas resistance, scratch resistance and light fastness, particularly in water resistance and ozone gas resistance. For this reason, the images recorded with the water-based black ink composition of the present invention are also excellent in terms of long-term storage stability of photographic tone images. Furthermore, in comparison to conventional inks, the water-based black ink composition of the present invention is also excellent in terms of the levels of color development properties such as chroma, brightness and print density on plain paper, in terms of color rendering properties, particularly sensor response properties in the near-infrared light region and color development properties.

As described above, the water-based black ink composition of the present invention is very useful in various recording inks, particularly when used as an ink for ink jet recording.

### EXAMPLES

Hereinafter, the present invention will be described more specifically by way of Examples, but the present invention is not intended to be limited by the following Examples. Meanwhile, the "parts" and "percent (%)" in the Examples are on a mass basis, unless particularly stated otherwise. Furthermore, the reaction temperature is the internal temperature. Furthermore, acidic functional groups such as a carboxy group and a sulfo group are described in the form of free acid in each structural formula of the compounds obtained in Examples. Furthermore, Examples 1 to 3 are synthesis examples of the compound represented by the formula (1).

### (A) Synthesis of black dye

### Example 1

### (Step 1)

20.1 Parts of 2-amino-5-naphthol-1,7-disulfonic acid and 12.6 parts of p-toluenesulfonyl chloride were reacted at pH 8.0 to 8.5 and at 70°C for 1 hour, and then salted-out in an acidic environment, and filtered and isolated, whereby to obtain a compound represented by the following formula (16). 28.4 parts of the compound represented by the formula (16) was dissolved in 300 parts of water while adjusting the system to pH 6.0 to 8.0 with sodium carbonate, and combined with 18.7 parts of 35% hydrochloric acid, and then combined with 10.7 parts of an aqueous solution of 40% sodium nitrite at 0 to 5°C, whereby to carry out diazotization.

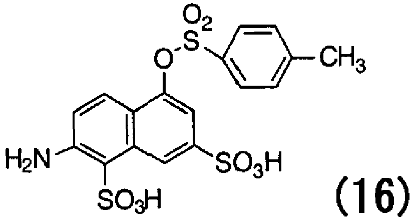

A solution in which 19.1 parts of 4-amino-5-hydroxynaphthalene-1,7-disulfonic acid was suspended in 200 parts of water was added to this diazo suspension and then stirred for 12 hours at 10 to 20°C while keeping the pH value of the solution at 2.4 to 2.8 with sodium carbonate. Then, the monoazo compound represented by the following formula (17) was dissolved while adjusting the pH value to 7.0 to 8.5 with sodium carbonate, to obtain a solution containing the monoazo compound represented by the following formula (17).

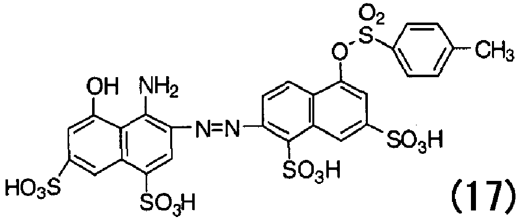

### (Step 2)

14.4 parts of sodium 4-nitroaniline-2-sulfonate was dissolved in 150 parts of water, and 18.8 parts of 35% hydrochloric acid and 10.6 parts of an aqueous solution of 40% sodium nitrite were added thereto at 0 to 5°C whereby to carry out diazotization. This diazo suspension was added by drops to a solution containing the monoazo compound represented by the formula (17) obtained in the reaction above at 10 to 20°C while keeping the pH value of the solution at 8.0 to 9.0 with sodium carbonate. After completing the addition of the drops, the reaction solution was stirred at 15 to 30°C and pH 8.0 to 9.0 for 2 hours, salted-out with the addition of sodium chloride, and filtered and isolated, whereby to obtain a wet cake containing a compound represented by the following formula (18).

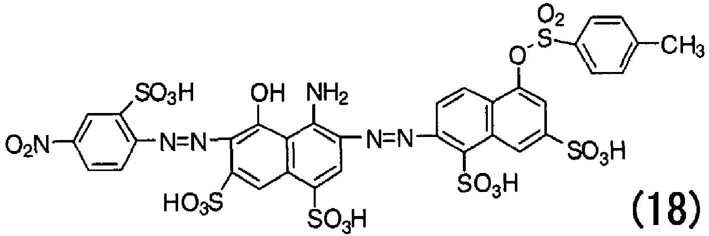

The wet cake obtained above was dissolved in 400 parts of water, and heated to 70°C, and then stirred for 1 hour while keeping the pH value at 10.5 to 11.0 with sodium hydroxide. The reaction solution was cooled to room temperature, and then adjusted to pH 7.0 to 8.0 with 35% hydrochloric acid, and combined with sodium chloride to perform salting-out, and filtered and isolated whereby to obtain a wet cake containing a compound represented by the following formula (19).

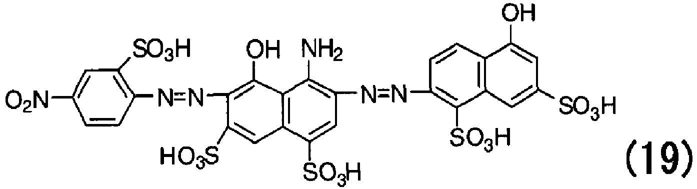

### (Step 3)

17.0 parts of a compound represented by the following formula (20) was dissolved in 170 parts of water while adjusting the pH to 7.0 to 8.0 with addition of lithium hydroxide, and 17.4 parts of 35% hydrochloric acid and 8.7 parts of an aqueous solution of 40% sodium nitrite were added thereto at 0 to 5°C whereby to carry out diazotization.

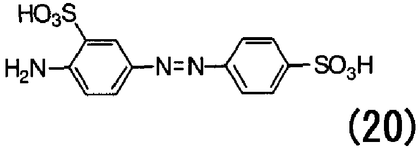

This diazo suspension was added by drops to a solution in which a wet cake containing a compound represented by the following formula (19) was dissolved in 400 parts of water at 10 to 25°C, while keeping the pH value of the solution at 8.0 to 9.0 with lithium hydroxide. After completion of the addition of the drops, the reaction solution was stirred at 15 to 30°C and pH 8.0 to 9.0 for 2 hours, and was salted-out with the addition of lithium chloride, and filtered and isolated. The obtained wet cake was dissolved in 400 parts of water, and crystallized with the addition of 1000 parts of 2-propanol, and filtered and isolated. In addition, the obtained wet cake was dissolved in 300 parts of water, and then crystallized with the addition of 900 parts of 2-propanol, and filtered and isolated, and dried whereby to obtain 49.0 parts of an azo compound represented by the following formula (21) (No. 1 compound in Table 2) as a lithium salt. The maximal absorption wavelength (λmax) of this compound in pH 9 aqueous solution was 590 nm, and the solubility with respect to water at room temperature was 100 g/L or higher.

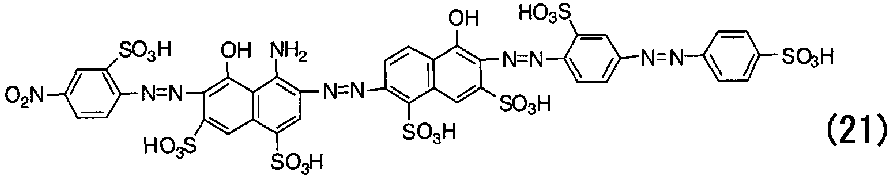

### Example 2

47.0 parts of an azo compound represented by the following formula (22) (No. 3 compound in Table 2) as a lithium salt was obtained similarly to Example 1 except that 14.4 parts of sodium 2-nitroaniline-4-sulfonate was used instead of 14.4 parts of sodium 4-nitroaniline-2-sulfonate in Step 2 of Example 1. The maximal absorption wavelength (λmax) of this compound in pH 9 aqueous solution was 592 nm, and the solubility with respect to water at room temperature was 100 g/L or higher.

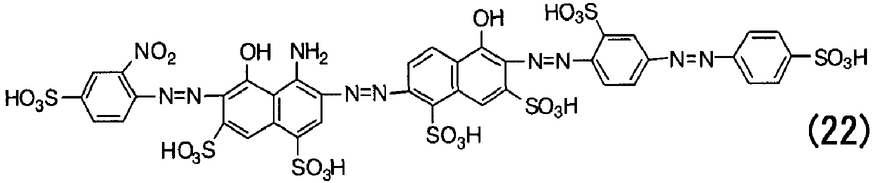

### Example 3

### (Step 1)

11.5 parts of sodium 4-nitroaniline-2-sulfonate was dissolved in 100 parts of water, and 14.1 parts of 35% hydrochloric acid, and 8.6 parts of an aqueous solution of 40% sodium nitrite were added thereto at 0 to 5°C whereby to carry out diazotization. To this diazo suspension, a solution in which 12.3 parts of a compound represented by the following formula (23) obtained by the method according to Example 2 of Patent Document 4 was dissolved in 100 parts of water while adjusting the pH to 5.0 to 6.0 with the addition of sodium hydroxide was added by drops while keeping the temperature at 10 to 15°C. After completion of the addition of the drops, the reaction solution was adjusted to pH 6.0 to 7.0 over 1 hour with addition of sodium carbonate, and then stirred at 15 to 20°C and pH 6.0 to 7.0 for 2 hours. The reaction solution was combined with sodium chloride to perform salting-out, and filtered and isolated, whereby to obtain a wet cake containing a compound represented by the following formula (24).

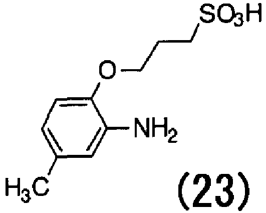

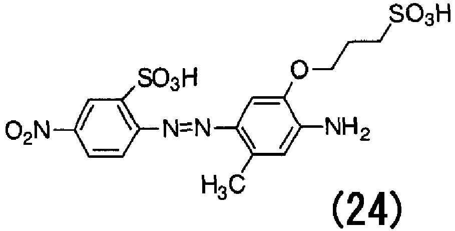

### (Step 2)

50.1 parts of an azo compound represented by the following formula (25) (No. 16 compound in Table 4) were obtained as a lithium salt similarly to Example 1 except that a wet cake containing a compound represented by the formula (24) obtained in the reaction described above was used instead of 17.0 parts of a compound represented by the formula (20) in Step 3 of Example 1. The maximal absorption wavelength (λmax) of this compound in pH 9 aqueous solution was 615 nm, and the solubility with respect to water at room temperature was 100 g/L or higher.

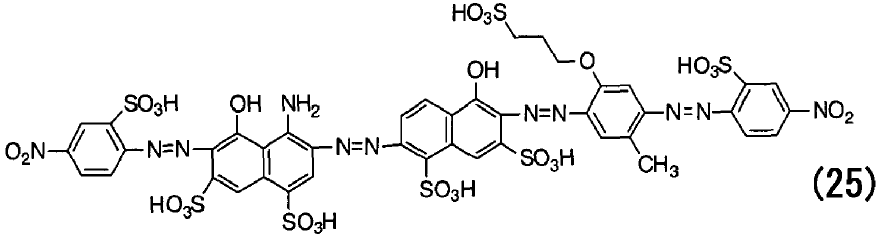

### (B) Preparation of black ink composition

### Examples 4 to 6

Respective components were mixed in the composition ratio shown in Table 5 below, and the reaction mixture was stirred for approximately 1 hour until the solid contents were dissolved, and then filtered with a 0.45 µm Membrane Filter (trade name, cellulose acetate based filter paper, manufactured by Advantec) whereby to prepare a water-based black ink composition for a test. As the dye, a dye was prepared with combination of the following Examples 4 to 6.

**[Table 5]**

| Ink composition | Composition ratio |
|---|---|
| Dye | X parts |
| Glycerin | 5.0 parts |
| Urea | 5.0 parts |
| 2-Pyrrolidone | 4.0 parts |
| Isopropyl alcohol | 3.0 parts |
| Butyl carbitol | 2.0 parts |
| Surfynol 440 | 0.1 parts |
| Sodium hydroxide + water | Remainder |
| Total | 100.0 parts |

### Example 4

C.I. Acid Black 2 (X = 2.5 parts)
Compound synthesized in Example 1 (X = 2.5 parts)
Total X = 5.0 parts

### Example 5

C.I. Acid Black 2 (X = 2.5 parts)
Compound synthesized in Example 1 (X = 2.0 parts)
C.I. Direct Orange 39 (X = 0.5 parts)
Total X = 5.0 parts

### Example 6

C.I. Acid Black 2 (X = 2.0 parts)
Compound synthesized in Example 1 (X = 2.5 parts)
C.I. Direct Orange 39 (X = 0.5 parts)
Total X = 5.0 parts

These water-based black ink compositions did not precipitate or separate during storage, and the physical properties did not change after long-term storage.

As Comparative Examples 1 and 2, dyes for Comparative Examples were mixed in the composition ratios shown in Table 5 similarly to Example 4 to 6, and water-based black ink compositions for Comparative Examples were prepared in a similar method.

### Comparative Example 1

Compound synthesized in Example 1 (X = 3.0)
C.I. Direct Red 80 (X = 1.0)
C.I. Direct Orange 39 (X = 1.0)
Total X = 5.0 parts

### Comparative Example 2

C.I. Direct Black 19 (X = 5.0 parts)
Total X = 5.0 parts

### (C) Ink jet print

The Ink jet recording was performed on fine quality plain paper (DL9084 manufactured by MITSUBISHI PAPER MILLS LIMITED.) with an ink jet printer (trade name: IP4100 manufactured by Canon, Inc.) using the respective water-based black ink compositions obtained in Examples 4 to 6 and Comparative Examples 1 and 2.

An image pattern was created at the time of printing so that several steps of gradation in the reflection density were obtained, and a halftone black printing object was obtained. Since the grayscale mode was used at the time of the printing, each recording solution of yellow, cyan and magenta was not used in combination besides the black recording solution. In the evaluation of the print density, which was an evaluation item using a colorimetric device among the test methods described below, the portion having the highest reflection density D value at the time when the printing density of the printing object (reflection density D value) was color-measured was used. Furthermore, measurement was performed similarly using the gradation portion having the highest D value of the printing object at the time when the reflectance of the near-infrared region was evaluated using a spectrophotometer.

### (D) Evaluation of recorded image

With respect to images recorded with the respective water-based black ink compositions obtained in Examples 4 to 6 and Comparative Examples 1 and 2 above, 2 points, that is, the print density (DB value) and the reflectance (%) were evaluated. The results thereof are shown in Table 6. The test methods are shown below.

### 1) Evaluation for print density (DB value)

The print density (DB value) of the recorded image was color-measured using GRETAG-SPM50 (manufactured by GRETAG), and the reflection density DB value was calculated. The judgment criteria are shown below.
A: DB value > 1.60
B: 1.60 ≥ DB value > 1.30
C: DB value ≤ 1.30

### 2) Evaluation for reflectance

The reflectance of the recorded images was measured using an ultraviolet-visible near infrared spectrophotometer UV3150 (manufactured by Shimadzu Corporation), and the reflectance % of the near-infrared light region was calculated. Meanwhile, Reflectance 1 is the reflectance measured at 700 nm, Reflectance 2 is the reflectance measured at 800 nm, and Reflectance 3 is the reflectance measured at 900 nm. The judgment criteria are shown below.
A: Reflectance ≤ 25%
B: 25% < reflectance ≤ 50%
C: Reflectance > 50%

**[Table 6]**

| | Print density (DB value) | Reflectance 1 | Reflectance 2 | Reflectance 3 |
|---|---|---|---|---|
| Example 4 | A | A | A | A |
| Example 5 | A | A | A | A |
| Example 6 | A | A | A | A |
| Comparative Example 1 | A | C | C | C |
| Comparative Example 2 | C | A | A | B |

From Table 6, it is found that the water-based black ink composition of the present invention has high print density, and has low reflectance in the near-infrared light region, and an excellent absorption property of near infrared light in comparison to conventional water-based black ink compositions (Comparative Examples).

### INDUSTRIAL APPLICABILITY

The water-based black ink composition of the present invention is excellent in print density and sensor response properties. Accordingly, the water-based black ink composition of the present invention is suitably used as a black ink liquid for ink jet recording or for writing materials.

## Claims

1. A water-based black ink composition comprising (i) C.I. Acid Black 2 as a coloring matter component.

2. The water-based black ink composition according to claim 1, further comprising (ii) a dye having three or more azo bonds (-N=N-) in the molecule as a coloring matter component.

3. The water-based black ink composition according to claim 2, wherein the dye having three or more azo bonds (-N=N-) in the molecule is a black dye represented by the following formula (1) or a salt thereof: 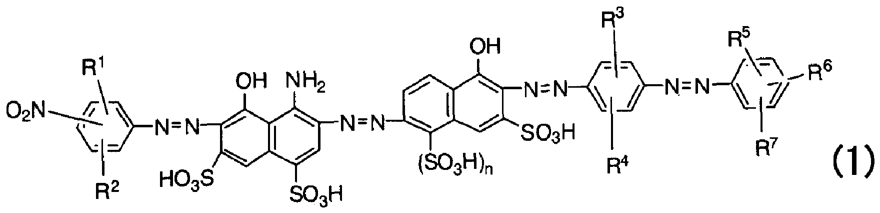
wherein, R¹, R², R⁵, R⁶, and R⁷ each independently represent a hydrogen atom; a halogen atom; a cyano group; a hydroxy group; a carboxy group; a sulfo group; a sulfamoyl group; an N-alkylaminosulfonyl group; an N-phenylaminosulfonyl group; a (C1-C4) alkylsulfonyl group optionally substituted with a hydroxy group; a phospho group; a nitro group; an acyl group; an ureido group; a (C1-C4) alkyl group optionally substituted with at least one group selected from the groups consisting of a hydroxy group and a (C1-C4) alkoxy group; a (C1-C4) alkoxy group optionally substituted with at least one group selected from the groups consisting of a hydroxy group, a (C1-C4) alkoxy group, a sulfo group, and a carboxy group; an acylamino group, an alkylsulfonylamino group; or a phenylsulfonylamino group optionally substituted with at least one group selected from the groups consisting of a halogen atom, an alkyl group, and a nitro group;
R³ and R⁴ each independently represent a hydrogen atom; a halogen atom; a cyano group; a carboxy group; a sulfo group; a nitro group; a (C1-C4) alkyl group optionally substituted with at least one group selected from the groups consisting of a hydroxy group and a (C1-C4) alkoxy group; a (C1-C4) alkoxy group optionally substituted with at least one group selected from the groups consisting of a hydroxy group, a (C1-C4) alkoxy group, a sulfo group, and a carboxy group; an acylamino group; an alkylsulfonylamino group; or a phenylsulfonylamino group optionally substituted with at least one group selected from the groups consisting of a halogen atom, an alkyl group, and a nitro group; and
n represents 0 or 1.

4. The water-based black ink composition according to claim 3, wherein R¹ is a carboxy group or a sulfo group, R² is a hydrogen atom, R⁶ is a nitro group, a carboxy group, or a sulfo group, and n is 1 in the formula (1).

5. The water-based black ink composition according to claim 3 or 4, wherein R¹ is a sulfo group, and when the substitution position of R¹ is the ortho position with respect to the azo group, the substitution position of the nitro group is the para position with respect to the azo group, and when the substitution position of R¹ is the para position with respect to the azo group, the substitution position of the nitro group is the ortho position with respect to the azo group.

6. The water-based black ink composition according to any one of claims 3 to 5, wherein R³ is a sulfo group, R⁴ is a hydrogen atom, R⁵ is a hydrogen atom, a carboxy group, or a sulfo group, and R⁷ is a hydrogen atom.

7. The water-based black ink composition according to claim 3, wherein the black dye represented by the formula (1) is a black dye represented by the following formula (2): 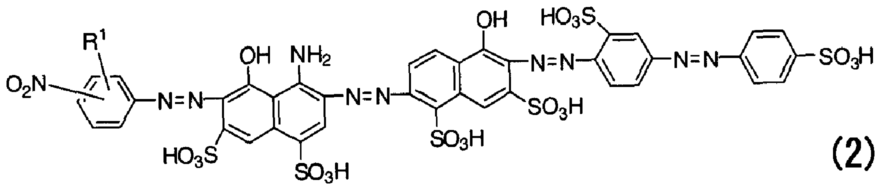 wherein, R¹ is a sulfo group, and when the substitution position of R¹ is the ortho position with respect to the azo group, the substitution position of the nitro group is the para position with respect to the azo group, and when the substitution position of R¹ is the para position with respect to the azo group, the substitution position of the nitro group is the ortho position with respect to the azo group.

8. The water-based black ink composition according to any one of claims 2 to 7, further comprising (iii) one, or two or more dyes selected from C.I. Direct Yellows 86, 132, and 142, C.I. Direct Oranges 17 and 39, C.I. Direct Reds 80, 84, and 227, C.I. Direct Browns 106 and 195, C.I. Acid Orange 95, and C.I. Acid Reds 249 and 254 as a coloring matter component.

9. The water-based black ink composition according to claim 8, wherein the water-based black ink composition contains 20 to 70% by mass of (i), 20 to 70% by mass of (ii), and 5 to 50% by mass of (iii) in the total mass of the coloring matter components.

10. The water-based black ink composition according to any one of claims 1 to 9, further comprising a water-soluble organic solvent.

11. The water-based black ink composition according to any one of claims 1 to 10, further comprising urea.

12. An ink jet recording method, which uses the water-based black ink composition according to any one of claims 1 to 11.

13. The ink jet recording method according to claim 12, wherein a record-receiving material in the ink jet recording method is a communication sheet.

14. An ink jet printer, which is loaded with a container containing the water-based black ink composition according to any one of claims 1 to 11.

15. A colored body, which is colored by means of the water-based black ink composition according to any one of claims 1 to 11.
